(19) Europäisches Patentamt
European Patent Office
Office européen des brevets

(11) Publication number: **0 074 132**
**B1**

(12) **EUROPEAN PATENT SPECIFICATION**

(45) Date of publication of patent specification: **30.04.86**

(51) Int. Cl.$^4$: **A 01 N 53/00**, C 07 C 69/74, C 07 C 69/743

(21) Application number: **82200980.9**

(22) Date of filing: **29.07.82**

# (54) Protection of crops against soil pests employing an alkylbenzyl cyclopropane carboxylate, novel cyclopropane carboxylates, and compositions containing them.

(30) Priority: **31.08.81 US 297808**
**31.08.81 US 297590**

(43) Date of publication of application:
**16.03.83 Bulletin 83/11**

(45) Publication of the grant of the patent:
**30.04.86 Bulletin 86/18**

(84) Designated Contracting States:
**AT BE CH DE FR GB IT LI NL SE**

(56) References cited:
**EP-A-0 031 199**
**FR-A-2 290 415**
**FR-A-2 364 884**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Gemrich II, Edwin Godfrey**
**1445 West Gull Lake Drive**
**Richland Michigan 49083 (US)**
Inventor: **Tieman, Charles Henry**
**2209 Fremont Street**
**Modesto California 95350 (US)**

(74) Representative: **Hunter, Keith Roger Ian et al**
**4 York Road**
**London SE1 7NA (GB)**

**The file contains technical information submitted after the application was filed and not included in this specification**

EP 0 074 132 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the use as soil insecticides of a group of alkylbenzyl pyrethroids, certain members of which group are novel compounds.

The prior art contains numerous patents and literature articles on pyrethroids, particularly for household and agricultural use. However, those pyrethroids which have recently found favour in agricultural applications because of high toxicity in foliar applications have, in general, not exhibited practical insecticidal activity. There has therefore been a need for a soil insecticide having the low mammalian toxicity characteristic of pyrethroids.

EP—A—31 199 discloses that certain pyrethroid-type compounds in which the alcohol moiety contains a fluorine-substituted benzyl group, have insecticidal activity, including activity against soil insects.

The Applicants have now found that a group of alkyl-substituted benzyl esters are useful as soil insecticides. The present invention thus provides a method for the protection of crops against attack from soil dwelling insects and their larvae, which comprises applying to soil in which such crops are growing or are to be grown an insecticidally effective amount of an alkylbenzyl cyclopropane carboxylate of the formula:—

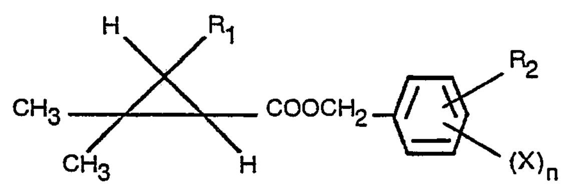

(I)

wherein $R_1$ represents a tetrahaloethyl or dihalovinyl group; $R_2$ represents an alkyl group of 1 to 4 carbon atoms; n is 0, 1, 2, 3 or 4; and each X, which may be the same or different when n is greater than 1, independently represents a methyl or ethyl group or a chlorine atom.

Examples of compounds which may be used in the method of the invention are the following esters of 2-(2,2-dichlorovinyl)-3,3-dimethylcyclopropanecarboxylic acid:—
3-methylbenzyl, 2-ethylbenzyl, 2-ethyl-6-methylbenzyl,
4-n-propylbenzyl, 4-isopropylbenzyl, 3,4-dimethylbenzyl,
2,5-dimethylbenzyl, 2,3-dimethylbenzyl, 3,5-dimethylbenzyl,
2,3,6-trimethylbenzyl, 2,3,4-trimethylbenzyl,
2,3,5-trimethylbenzyl, 2,3,4,5-tetramethylbenzyl,
2-methyl-4-ethylbenzyl, 2,6-dimethyl-4-ethylbenzyl,
2-chloro-6-methylbenzyl, 2-chloro-4,6-dimethylbenzyl,
2,4-dichloro-6-methylbenzyl, 2,6-dimethyl-4-chlorobenzyl,
2-chloro-4-ethylbenzyl, and the corresponding esters with
2-(2,2-dibromovinyl)-3,3-dimethylcyclopropanecarboxylic acid and the like.

The alkylbenzene cyclopropane carboxylates defined above are novel, with the exception of those compounds wherein the alkyl-benzyl group is 2,6-dimethylbenzyl, 2-methylbenzyl or 3,5-dimethyl-4-chlorobenzyl, and in a further embodiment this invention includes also such novel compounds *per se*.

Suitable compounds are those wherein $R_1$ represents a dibromodichloroethyl, dichlorovinyl or dibromovinyl group. Preferably $R_1$ represents a 2,2-dichlorovinyl group, n is 0, 1 or 2 and the substituents $R_2$ and X on the benzene ring are located at the 2 and/or 4 and/or 6 positions, and in particular such compounds wherein $R_2$ is a methyl or ethyl group and X is a methyl or ethyl group or a chlorine atom, especially those wherein $R_2$ is methyl and X is methyl or chlorine. Suitable alkylbenzyl groups thus include 2-methylbenzyl, 4-methylbenzyl, 4-ethylbenzyl, 2,6-dimethylbenzyl, 2,4-dimethylbenzyl, 2-methyl-4-chlorobenzyl, 2-methyl-6-chlorobenzyl and 2,4,6-trimethylbenzyl.

The active compounds may exist as optical isomers by virtue of the asymmetric carbon atom or atoms in the acid moiety. Use of the racemic mixture and various forms of mixtures of the possible isomers as well as the single isomers are within the scope of the invention, for example, the *trans* form, but preferably, the *cis* form and especially the (1R, *cis*) form of cyclopropanecarboxylic acids and when these forms are used substantially free of other stereoisomers, their purity is at least about 75% and preferably at least about 80%. Higher purities, such as at least 95% are especially useful.

The active compounds are conveniently applied in the form of compositions comprising also one or more carriers and/or surface active agents. The term "carrier" as used herein means a material, which may be inorganic or organic and of synthetic or natural origin, with which the active compound is mixed or formulated to facilitate its application to the soil, or its storage, transport or handling. The carrier may be a solid or a liquid. Any of the materials usually applied in formulating pesticides, herbicides, or fungicides may be used as the carrier.

Suitable solid carriers are natural and synthetic clays and silicates, for example, natural silicas such as diatomaceous earths; magnesium silicates, for example, talcs; magnesium aluminium silicates, for

example, attapulgites and vermiculites; aluminium silicates, for example, kaolinites, montmorillinites and micas; calcium carbonates; calcium or aluminium silicates; elements, for example, carbon and sulphur; natural and synthetic resins such as, for example coumarone resins, polyvinyl chloride and styrene polymers and copolymers; solid polychlorophenols; bitumen; waxes such as, for example, beeswax, paraffin wax, and chlorinated mineral waxes; and solid fertilisers, for example, superphosphates.

Suitable liquid carriers are water, alcohols, for example, isopropanol and glycols; ketones, for example, acetone, methyl ethyl ketone, and cyclohexanone; ethers; aromatic hydrocarbons, for example, benzene, toluene and xylene; petroleum fractions, for example, kerosine and light mineral oils; chlorinated hydrocarbons, for example, carbon tetrachloride, perchloroethylene, trichloroethane; and liquified normally vaporous, gaseous compounds. Mixtures of different liquids are often suitable.

The surface-active agent may be an emulsifying agent or a dispersing agent or a wetting agent; it may be non-ionic or ionic. Any of the surface-active agents usually applied in formulating pesticides, herbicides or fungicides, may be used. Examples of suitable surface-active agents are the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohols or alkyl phenols for example *p*-octylphenol or *p*-octylcresol, with ethylene oxide and/or propylene oxide; sulphates or sulphonates of these condensation products; alkali or alkaline earth metal salts, preferably sodium salts of sulphuric or sulphonic acid esters containing at least 10 carbon atoms in the molecule, for example, sodium lauryl sulphate, sodium secondary alkyl sulphates, sodium salts or sulphonated castor oil, and sodium alkylaryl sulphonates such as sodium dodecylbenzene sulphate; and polymers of ethylene oxide and copolymers of ethylene oxide and propylene oxide.

The compositions may be formulated as wettable powders, dusts, granules, solutions, emulsifiable concentrates, emulsions, suspension concentrates and aerosols. Wettable powders are usually compounded to contain 25, 50 and 75% of toxicant and usually contain, in addition to solid carrier, 3—10% w of a dispersing agent and, where necessary, 0—10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing 1/2—10% w of toxicant. Granules are usually prepared to have a size between 10 and 100 BS mesh (1.676—0.152 mm), and may be manufactured by agglomeration or impregnation techniques. Generally, granules will contain 1/2—25% w toxicant and 0—10% w of additives such as stabilisers, slow release modifiers and binding agents. Emulsifiable concentrates usually contain, in addition to the solvent and, when necessary, co-solvent, 10—50% w toxicant, 2—20% w/v emulsifiers and 0—20% w/v of appropriate additives such as stabilisers, penetrants and corrosion inhibitors. Suspension concentrates are compounded so as to obtain a stable, non-sedimenting flowable product and usually contain 10—75% w toxicant, 0.5—15% w of dispersing agents, 0.1—10% w of suspending agents such as protective colloids and thixotropic agents, 0—10% of appropriate additives such as defoamers, corrosion inhibitors, stabilisers, penetrants and stickers, and as liquid carrier, water or an organic liquid in which the toxicant is substantially insoluble; certain orgnaic solids or inorganic salts may be dissolved in the liquid carrier to assist in preventing sedimentation or as antifreeze agents for water.

Aqueous dispersions and emulsions, for example, compositions obtained by diluting a wettable powder or a concentrate according to the invention with water, also lie within the scope of the present invention. The said emulsions may be of the water-in-oil or of the oil-in-water type, and may have a thick "mayonnaise"-like consistency.

The compositions may also contain other ingredients, for example, other compounds possessing pesticidal, herbicidal or fungicidal properties.

The compounds are particularly useful for controlling a variety of insects in the soils which are damaging to growing plants. The effectiveness of these materials as soil insecticides for protecting growing plants is surprising in view of the low soil activity of other pyrethroids widely used as foliar insecticides. The materials of the invention are well suited for the control of *Diabrotica* species, for example *Diabrotica virgifera* Le Conti, *Diabrotica longicornis* (Say), and *Diabrotica undecimpunctata howardi* Barber, the western, northern and southern corn rootworm, respectively, particularly in their larval stages. Because the materials of the invention have unusually good larvicidal activity, they may be advantageously used against rootworms, cutworms and wireworms, for example, larvae of *Diabrotica* (rootworms), *Agrotis, Crymodes, Amathes, Euxoa, Peridroma, Lacinipolia, Nephelodes, Actebia, Feltia, Loxagrotis* (cutworms), *Agriotes, Lemonius, Horiatonotus, Ctenicera, Conoderus* (wireworms) and the like. Some of the better known larval species of the above are: *Agrotis ipsilon (Hugnagel)* (black cutworm), *Agriotes mancus* (soy) (wheat wireworm) and particularly the three *Diabrotica* species mentioned above.

The materials of the invention are suitably applied to the soil at a rate of 0.1 to 11 kg/ha. Good control of soil inhabiting insects is obtained at rates of from about 0.1 to about 5 kg/ha, and especially from about 0.1 to about 4 kg/ha.

In the method according to the invention, the active ingredient can be conveniently formulated for use as granules or powders containing a solid diluent impregnated with the active ingredient. Such

formulations usually contain from about 1 to 50% by weight of active ingredient. More effective control will result when the formulation is physically mixed with the topsoil, as by harrowing, for example, as a pretreatment before seeding.

The formulations can be applied as a drench, that is as a solution or dispersion of the active ingredient in a non-phytotoxic solvent or liquid diluent, suitably water. Such drenches can be prepared by diluting with water a concentrate containing the active ingredient, an emulsifying agent, and preferably an organic solvent such as toluene. The formulations can be applied as a band, furrow or side dress, and can either be incorporated into the soil or not.

The active compounds may be obtained, for example, by treating 2-(2,2-dichlorovinyl)-3,3-dimethyl-cyclopropanecarboxylic acid or a reactive derivative thereof, such as acid chloride, salt or alkyl ester, with the appropriately substituted alkyl-benzyl alcohol or reactive derivative thereof, such as halide, as, for example, in French patent 2,290,415. The reaction is preferably carried out in the presence of a suitable base, for example, a tertiary amine, such as triethylamine or an alkali metal carbonate, such as potassium or sodium carbonate, in the presence of an inert solvent. The kinds of acids and reactive derivatives thereof are known from Farkas, J. et al., Collection Czechoslov. Chem. Commun., pages 2230—6 (1958) U.S. patents 4,024,163, 4,179,575; 4,257,978 and the alcohols are known from, for example, U.S. patent 3,567,740.

The present invention is illustrated by the following Examples which describe the synthesis and testing of materials of the invention. The Examples are provided for the purpose of illustration only, and should not be regarded as limiting the invention in any way. The identity of the products was confirmed by elemental, infrared (IR) and nuclear magnetic resonance spectral (NMR) analyses as necessary.

### Example I

2,4,6-trimethylbenzyl *cis*-2-(2,2-dichlorovinyl)-3,3-dimethylcyclopropanecarboxylate

To a stirred slurry of 1.5 g of potassium carbonate in 50 ml of acetonitrile, were added 2.1 g of *cis*-2-(2,2-dichlorovinyl)-3,3-dimethyl-cyclopropanecarboxylic acid, about 0.1 g of 18-crown-6 ether and then 1.7 g of 2,4,6-trimethylbenzyl chloride. The reaction mixture was heated to 60—65°C for 2½ hours. The cooled reaction mixture was partitioned between water and methylene chloride. The methylene chloride layer was dried over $MgSO_4$ and evaporated to yield 2.4 g of the desired product as a colourless solid; m.p. 44—59°C.

### Example II

2-chloro-6-methylbenzyl *cis*-2-(2,2-dichlorovinyl-3,3-dimethylcyclopropanecarboxylate

To a stirred solution of 0.75 g of 2-chloro-6-methylbenzyl alcohol and 0.9 ml of triethylamine in 20 ml methylene chloride cooled by an ice bath, was added 1,3 g of *cis*-2-(2,2-dichlorovinyl-3,3-dimethylcyclopropanecarboxylic acid chloride. The resulting mixture was washed three times with water, then separated and dried. The methylene chloride solution was concentrated, distilled and chromatographed to yield 0.9 g of the desired product.

### Examples III—XI

Following procedures similar to Examples I and II, the following esters were prepared as set forth in Table I below.

TABLE I

Alkylbenzyl esters of 2-(2,2-dichlorovinyl)-3,3-dimethylcyclopropanecarboxylic acid

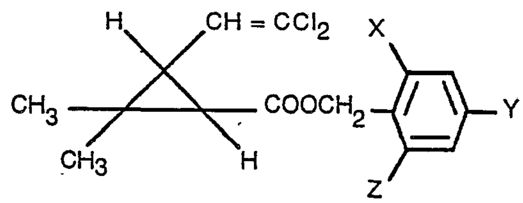

| Example | X | Y | Z | Acid Configuration | Boiling or Melting Point, (°C), or Refractive Index |
|---|---|---|---|---|---|
| III | $CH_3$ | Cl | H | *cis* | b.p. 130—140 at 0.08 mm |
| IV | $CH_3$ | H | $CH_3$ | *cis* | (not determined) |
| V | $CH_3$ | H | $CH_3$ | *cis/trans* | $N_D^{24}$ 1.5392 |
| VI | $CH_3$ | $CH_3$ | H | *cis* | 109—118 at 0.02 mm |
| VII | $CH_3$ | H | H | *cis/trans* | $N_D^{18}$ 1.5420 |
| VIII | H | $CH_3$ | H | *cis* | 95—105 at 0.02 mm |
| IX | H | $C_2H_5$ | H | *cis* | 125—140 at 0.2 mm |
| X | H | n-$C_3H_7$ | H | *cis* | 118—130 at 0.05 mm |
| XI | $C_2H_5$ | H | H | *cis* | 120—135 at 0.04 mm |

## Example XII

2-chloro-6-methylbenzyl (*cis)*f-2-(1,2-dibromo-2,2-dichloroethyl)-3,3-dimethylcyclopropanecarboxylate

To a stirred solution of 4.4 g of 2-chloro-6-methylbenzyl (*cis*)-2-(2,2-dichlorovinyl)-3,3-dimethylcyclopropanecarboxylate in 25 ml of carbon tetrachloride is added dropwise 2.1 g of bromine in 5 ml of carbon tetrachloride. The resulting mixture is irradiated with ultraviolet light for 7 hours. Solvent is evaporated from the resulting mixture and the residue distilled to yield the desired product.

Following procedures similar to Example XIII above, 2,6-dimethylbenzyl (1R,*cis*)-2-(1,2-dibromo-2,2-dichloroethyl)-3,3-dimethylcyclopropanecarboxylate, 4-methylbenzyl (*cis*)-2-(1,2-dibromo-2,2-dichloroethyl)-3,3-dimethylcyclopropanecarboxylate and the like are prepared.

## Example XIII

Soil Activity

The test compound is dissolved in a solvent and thoroughly incorporated into dry soil. After venting traces of solvent, the soil moisture level is brought to 9% by adding water and thoroughly mixing.

60 g of moist soil is added to a 100 ml wide-mouthed jar to half full. Two sweet corn seeds, which have been surface sterilized in 0.2% sodium hypochlorite solution for 15 minutes and rinsed with water, are pressed into the soil near the perimeter of the jar. A small cavity of about 2.5 cc is opened in the surface of the soil and 20 *Diabrotica undecimpunctata undecimpunctata* Mannerheim (western spotted cucumber beetle) eggs are placed in the well. The are immediately covered over with fine-sieved Zonolite or Vermiculite and the covering material is wet with about 1.3 cc of water. The jar is then capped with a lid into which two 2 mm holes have been drilled for ventilation. The jars are placed under lamps at 27°C for holding. The eggs are generally two to four days old.

After one week, the jar contents are examined for the presence of live larvae and the number is recorded and the corn roots are examined for feeding damage. Compounds showing control at 3 ppm or lower rate in the first week are evaluated at subsequent weeks. Activity at 3 ppm indicates viable soil insecticidal activity.

Results of tests with several optical forms of alkylbenzyl (1R,*cis*)-2-(2,2-dichlorovinyl)-3,3-dimethylcyclopropanecarboxylates are shown in Table II below. In these tests, the results were evaluated and reported as follows:—

| Rating | Control Potential | Larval Count |
|---|---|---|
| 0 | Complete control | 0 |
| 1 | Excellent | >0 to ≤3 |
| 2 | Good | >3 to ≤6 |
| 3 | Fair | >6 to <10 |
| 4 | Poor | >10 |

TABLE II

Control Potential of Alkylbenzyl 2-(2,2-dichlorovinyl)-3,3-dimethylcyclopropanecarboxylate to *Diabroticaundecimpunctata undecimpunctata* Larvae in Soil

| Ester | Dosage PPM | Rating at Weeks After Treatment 0 | 2 | 4 | 8 |
|---|---|---|---|---|---|
| 2-$CH_3$-benzyl *cis* | 3.0 | 0 | 0 | 0 | 0 |
| | 1.0 | 3 | 4 | | |
| | 0.3 | 4 | 4 | | |
| 4-$CH_3$-benzyl *cis* | 3.0 | 0 | 0 | 0 | 0 |
| | 1.0 | 1 | 2 | 3 | |
| | 0.3 | 4 | 4 | | |
| 2-$CH_3$-4-Cl-benzyl *cis* | 3.0 | 0 | 0 | | |
| | 1.0 | 3 | 3 | | |
| | 3.0 | 3 | | | |
| 2,6-$(CH_3)_2$-benzyl *cis* | 3.0 | 0 | 0 | 0 | 0 |
| | 1.0 | 0 | 0 | 0 | 0 |
| | 0.3 | 0 | 0 | 1 | 0 |
| | 0.1 | 4 | 2 | 3 | 3 |
| 2-Cl-6-$CH_3$-benzyl *cis* | 3.0 | 0 | 0 | 0 | 0 |
| | 1.0 | 0 | 0 | 0 | 0 |
| | 0.3 | 2 | 1 | 2 | 3 |
| 2,4,6-$(CH_3)_3$-benzyl *cis* | 3.0 | 0 | 0 | 0 | 0 |
| | 1.0 | 0 | 1 | 1 | 3 |
| | 0.3 | 2 | 4 | | |

**Claims for the Contracting States: BE CH DE FR GB IT LI NL SE**

1. Method for the protection of crops against attack from soil dwelling insects and their larvae, which comprises applying to soil in which such crops are growing or are to be grown an insecticidally effective amount of an alkylbenzyl cyclopropane carboxylate of the formula:—

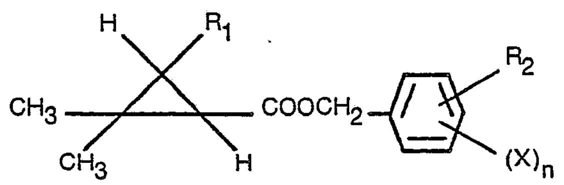

(I)

wherein $R_1$ represents a tetrahaloethyl or dihalovinyl group; $R_2$ represents an alkyl group of 1 to 4 carbon atoms; n is 0, 1, 2, 3 or 4 and each X, which may be the same or different when n is greater than 1, independently represents a methyl or ethyl group or a chlorine atom.

2. Method as claimed in claim 1 wherein $R_1$ represents a dibromodichloroethyl, dichlorovinyl or dibromovinyl group.

3. Method as claimed in claim 2 wherein $R_2$, X and n are so selected that the resultant alkylbenzyl group is 4-methylbenzyl, 2,6-dimethylbenzyl, 2-methyl-6-chlorobenzyl, or 2,4,6-trimethylbenzyl.

4. Method as claimed in claim 1, 2 or 3 wherein the soil is physically mixed with granules which contain an alkylbenzyl carboxylate as defined in claim 1, 2 or 3 together with a solid carrier and a surfactant.

5. Method as claimed in claim 1, 2 or 3 wherein the alkylbenzyl carboxylate is formulated with a liquid carrier and applied to the soil as a drench at an application rate of 0.1 kg/ha to 11 kg/ha.

6. Method as claimed in any one of the preceding claims wherein the alkylbenzyl carboxylate has the *cis* configuration, substantially free from other stereoisomers.

7. Alkylbenzyl cyclopropane carboxylates of the formula I above wherein $R_1$ represents a 2,2-dihalovinyl group and $R_2$, n and X are as defined in claim 1, with the proviso that the alkylbenzyl group is not 2,6-dimethylbenzyl, 2-methylbenzyl or 3,5-dimethyl-4-chlorobenzyl.

8. Alkylbenzyl carboxylates as claimed in claim 7 wherein $R_1$ represents a 2,2-dichlorovinyl group; n is 0, 1 of 2 and the substituents $R_2$ and X on the benzene ring are located at the 2 and/or 4 and/or 6 positions.

9. Alkylbenzyl carboxylates as claimed in claim 8 wherein $R_2$ is a methyl group and X is a methyl group or a chlorine atom.

10. Insecticidal compositions comprising an alkylbenzyl carboxylate as claimed in any one of claims 7 to 9 together with one or more carriers and/or surface active agents.

11. Method for the protection of crops against attack from soil dwelling insects and their larvae, which comprises applying to soil in which such crops are growing or are to be grown an insecticidally effective amount of an alkylbenzyl carboxylate as claimed in any one of claims 7 to 9 or a composition as claimed in claim 10.

**Claims for the Contracting State: AT**

1. Method for the protection of crops against attack from soil dwelling insects and their larvae, which comprises applying to soil in which such crops are growing or are to be grown an insecticidally effective amount of an alkylbenzyl cyclopropane carboxylate of the formula:—

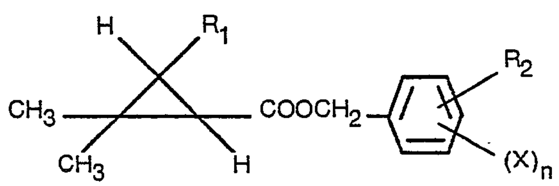

(I)

wherein $R_1$ represents a tetrahaloethyl of dihalovinyl group; $R_2$ represents an alkyl group of 1 to 4 carbon atoms; n is 0, 1, 2, 3 or 4 and each X, which may be the same or different when n is greater than 1, independently represents a methyl or ethyl group or a chlorine atom.

2. Method as claimed in claim 1 wherein $R_1$ represents a dibromodichloroethyl, dichlorovinyl or dibromovinyl group.

3. Method as claimed in claim 2 wherein $R_2$, X and n are so selected that the resultant alkylbenzyl group is 4-methylbenzyl, 2,6-dimethylbenzyl, 2-methyl-6-chlorobenzyl, or 2,4,6-trimethylbenzyl.

4. Method as claimed in claim 1, 2 or 3 wherein the soil is physically mixed with granules which contain an alkylbenzyl carboxylate as defined in claim 1, 2 or 3 together with a solid carrier and a surfactant.

5. Method as claimed in claim 1, 2 or 3 wherein the alkylbenzyl carboxylate is formulated with a liquid carrier and applied to the soil as a drench at an application rate of 0.1 kg/ha to 11 kg/ha.

6. Method as claimed in any one of the preceding claims wherein the alkylbenzyl carboxylate has the *cis* configuration, substantially free from other stereoisomers.

7. Insecticidal compositions comprising an alkylbenzyl carboxylate of the formula I above wherein $R_1$ represents a 2,2-dihalovinyl group and $R_2$, n and X are as defined in claim 1, with the proviso that the alkylbenzyl group is not 2,6-dimethylbenzyl, 2-methylbenzyl or 3,5-dimethyl-4-chlorobenzyl.

8. Insecticidal compositions as claimed in claim 7 wherein $R_1$ represents a 2,2-dichlorovinyl group; n is 0, 1 or 2 and the substituents $R_1$ and X on the benzene ring are located at the 2 and/or 4 and/or 6 positions.

9. Insecticidal compositions claimed in claim 8 wherein $R_2$ is a methyl group and X is a methyl group or a chlorine atom.

10. Method for the protection of crops against attack from soil dwelling insects and their larvae, which comprises applying to soil in which such crops are growing or are to be grown an insecticidally effective amount of a composition as claimed in any one of claims 7 to 9.

**Patentansprüche für die Vertragsstaaten: BE CH DE FR GB IT LI NL SE**

1. Verfahren zum Schutz von Nutzpflanzen gegen einen Angriff durch bodenlebende Insekten und ihre Larven, welches ein Aufbringen einer insektizid wirksamen Menge eines Alkylbenzylzyklopropancarboxylats der Formel:

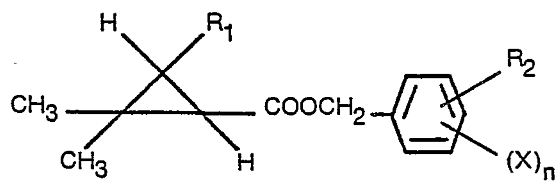

(I)

worin $R_1$ eine Tetrahalogenethyl- oder Dihalogenvinylgruppe bedeutet; $R_2$ eine Alkylgruppe mit 1 bis 4 Kohlenstoffatomen darstellt; n den Wert 0, 1, 2, 3 oder 4 hat und jeder Rest X, der gleich oder verschieden sein kann, wenn n eine Zahl großer als 1 ist, unabhängig voneinander eine Methyl- oder Ethylgruppe oder ein Chloratom bedeutet, auf den Boden, in welchem diese Nutzpflanzen wachsen oder gezogen werden sollen, umfaßt.

2. Verfahren nach Anspruch 1, worin $R_1$ eine Dibromdichlorethyl-, Dichlorvinyl- oder Dibromvinylgruppe bedeutet.

3. Verfahren nach Anspruch 2, worin $R_2$, X und n derart ausgewählt sind, daß die resultierende Alkylbenzylgruppe 4-Methylbenzyl, 2,6-Dimethylbenzyl, 2-Methyl-6-chlorbenzyl oder 2,4,6-Trimethylbenzyl ist.

4. Verfahren nach Anspruch 1, 2 oder 3, worin der Boden physikalisch mit Körnchen gemischt wird, welche ein Alkylbenzylcarboxylat, wie in Anspruch 1, 2 oder 3 definiert, zusammen mit einem festen Träger und einem oberflächenaktiven Mittel enthalten.

5. Verfahren nach Anspruch 1, 2 oder 3, worin das Alkylbenzylcarboxylat mit einen flüssigen Träger formuliert und in Form eines Gusses auf den Boden in einer Aufwandmenge von 0,1 kg/ha bis 11 kg/ha aufgebracht wird.

6. Verfahren nach einem der vorstehenden Ansprüche, worin das Alkylbenzylcarboxylat die cis-Konfiguration, im wesentlichen frei von anderen Stereoisomeren, aufweist.

7. Alkylbenzylzyklopropancarboxylat der vorstehenden Formel (I), worin $R_1$ eine 2,2-Dihalogenvinylgruppe bedeutet und $R_2$, n und X wie in Anspruch 1 definiert sind, mit der Maßgabe, daß die Alkylbenzylgruppe nicht 2,6-Dimethylbenzyl, 2-Methylbenzyl oder 3,5-Dimethyl-4-chlorbenzyl ist.

8. Alkylbenzylcarboxylate nach Anspruch 7, worin $R_1$ eine 2,2-Dichlorvinylgruppe bedeutet; n den Wert 0, 1 oder 2 aufweist und die Substituenten $R_2$ und X am Benzolring in den 2- oder 4- und/oder 6-Stellungen angeordnet sind.

9. Alkylbenzylcarboxylate nach Anspruch 8, worin $R_2$ eine Methylgruppe ist und X eine Methylgruppe oder ein Chloratom bedeutet.

10. Insektizide Zusammensetzungen, umfassend ein Alkylbenzylcarboxylat, wie in einem der Ansprüche 7 bis 9 beansprucht, zusammen mit einem oder mehreren Trägern und/oder oberflächenaktiven Mitteln.

11. Verfahren zum Schutz von Nutzpflanzen gegen den Angriff von bodenlebenden Insekten und deren Larven, welches ein Aufbringen einer insektizid wirksamen Menge eines Alkylbenzylcarboxylats, wie in einem der Ansprüche 7 bis 9 beansprucht, oder einer Zusammensetzung, wie in Anspruch 10 beansprucht, auf den Boden, in welchem diese Pflanzen wachsen oder gezogen werden sollen, umfaßt.

**Patentansprüche für den Vertragsstaat: AY**

1. Verfahren zum Schutz von Nutzpflanzen gegen einen Angriff durch bodenlebende Insekten und ihre Larven, welches ein Aufbringen einer insektizid wirksamen Menge eines Alkylbenzylzyklopropan-carboxylats der Formel:

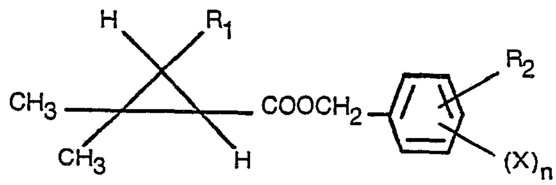

(I)

worin $R_1$ eine Tetrahalogenethyl- oder Dihalogenvinylgruppe bedeutet; $R_2$ eine Alkylgruppe mit 1 bis 4 Kohlenstoffatomen darstellt; n den Wert 0, 1, 2, 3 oder 4 hat und jeder Rest X, der gleich oder verschieden sein kann, wenn n eine Zahl größer als 1 ist, unabhängig voneinander eine Methyl- oder Ethylgruppe oder ein Chloratom bedeutet, auf den Boden, in welchem diese Nutzpflanzen wachsen oder gezogen werden sollen, umfaßt.

2. Verfahren nach Anspruch 1, worin $R_1$ eine Dibromdichlorethyl-, Dichlorvinly- oder Dibromvinylgruppe bedeutet.

3. Verfahren nach Anspruch 2, worin $R_2$, X und n derart ausgewählt sind, daß die resultierende Alkylbenzylgruppe 4-Methylbenzyl, 2,6-Dimethylbenzyl, 2-Methyl-6-chlorbenzyl oder 2,4,6-Trimethylbenzyl ist.

4. Verfahren nach Anspruch 1, 2 oder 3, worin der Boden physikalisch mit Körnchen gemischt wird, welche ein Alkylbenzylcarboxylat, wie in Anspruch 1, 2 oder 3 definiert, zusammen mit einem festen Träger und einem oberflächenaktiven Mittel enthalten.

5. Verfahren nach Anspruch 1, 2 oder 3, worin das Alkylbenzylcarboxylat mit einem flüssigen Träger formuliert und in Form eines Gusses auf den Boden in einer Aufwandmenge von 0,1 kg/ha bis 11 kg/ha aufgebracht wird.

6. Verfahren nach einem der vorstehenden Ansprüche, worin das Alkylbenzylcarboxylat die cis-Konfiguration, im wesentlichen frei von anderen Stereoisomeren, aufweist.

7. Insektizide Zusammensetzungen, umfassend ein Alkylbenzylcarboxylat der vorstehenden Formel (I), worin $R_1$ eine 2,2-Dihalogenvinylgruppe bedeutet und $R_2$, n und X wie in Anspruch 1 definiert sind, mit der Maßgabe, daß die Alkylbenzylgruppe nicht 2,6-Dimethylbenzyl, 2-Methylbenzyl oder 3,5-Dimethyl-4-chlorbenzyl ist.

8. Insektizide Zusammensetzungen nach Anspruch 7, worin $R_1$ eine 2,2-Dichlorvinylgruppe bedeutet; n den Wert 0, 1 oder 2 hat und die Substituenten $R_2$ und X am Benzolring in den 2- und/oder 4- und/oder 6-Stellungen angeordnet sind.

9. Insektizide Zusammensetzungen nach Anspruch 8, worin $R_2$ eine Methylgruppe ist und X eine Methylgruppe oder ein Chloratom bedeutet.

10. Verfahren zum Schutz von Nutzpflanzen gegen den Angriff durch bodenlebende Insekten und deren Larven, welches ein Aufbringen einer insektizid wirksamen Menge einer Zusammensetzung, wie in einem der Ansprüche 7 bis 9 beansprucht, auf den Boden, in welchem diese Pflanzen wachsen oder gezogen werden sollen, umfaßt.

**Revendications pour les Etats contractants: BE CH DE FR GB IT NL SE**

1. Méthode pour la protection de plantes cultivées contre l'attaque par des insectes infestant le sol, qui comprend l'application au sol dans lequel ces plantes poussent ou doivent pousser d'une quantité efficace du point de vue insecticide d'un cyclopropane carboxylate d'alkykbenzyle de la formule:

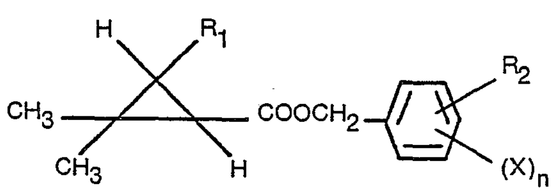

(I)

où $R_1$ représente un groupe tétrahaloéthyle ou dihalovinyle; $R_2$ représente un groupe alkyle de 1 à 4 atomes de carbone; n est 0, 1, 2, 3 ou 4 et les X, qui peuvent être identiques ou différents quand n est plus grand que 1, représentent chacun indépendamment un groupe méthyle ou éthyle ou un atome de chlore.

2. Méthode selon la revendication 1, dans laquelle $R_1$ représente un groupe dibromodichloroéthyle, dichlorovinyle ou dibromovinyle.

3. Méthode selon la revendication 2, dans laquelle $R_2$, X et n sont choisis de façon que le groupe alkylbenzyle résultant soit un groupe 4-méthylbenzyle, 2,6-diméthylbenzyle, 2-méthyl-6-chlorobenzyle ou 2,4,6-triméthylbenzyle.

4. Méthode selon la revendication 1, 2 ou 3, dans laquelle la terre est mélangée physiquement avec des granules qui contiennent un carboxylate d'alkylbenzyle tel que défini dans la revendication 1, 2 ou 3 en même temps qu'un véhicule solide et un agent tensio-actif.

5. Méthode selon la revendication 1, 2 ou 3, dans laquelle le carboxylate d'alkylbenzyle est mis en composition avec un véhicule liquide at appliqué au sol par arrosage à une dose d'application de 0,1 kg/ha à 11 kg/ha.

6. Méthode selon l'une quelconque des revendications précédentes, dans laquelle le carboxylate d'alkylbenzyle a la configuration *cis* et est substantiellement exempt d'autres stéréo-isomères.

7. Cyclopropane carboxylates d'alkylbenzyle de la formule I ci-dessus, où $R_1$ représente un groupe 2,2-dihalovinyle et $R_2$, n et X sont tels que définis dans la revendication 1, avec la condition que le groupe alkylbenzyle n'est pas un groupe 2,6-diméthylbenzyle, 2-méthylbenzyle ou 3,5-diméthyl-4-chlorobenzyle.

8. Carboxylates d'alkylbenzyle selon la revendication 7, dans lesquels $R_1$ représente un groupe 2,2-dichlorovinyle; n est 0, 1 ou 2 et les substituants $R_2$ et X sur le noyau benzénique sont situés aux positions 1 et/ou 4 et/ou 6.

9. Carboxylates d'alkylbenzyle selon la revendication 8, dans lesquels $R_2$ est un groupe méthyle et X est un groupe méthyle ou un atome de chlore.

10. Compositions insecticides comprenant un carboxylate d'alkylbenzyle selon l'une quelconque des revendications 7 à 9 en même temps qu'un ou plusieurs véhicules et/ou agents tensio-actifs.

11. Méthode pour la protection de plantes cultivées contre l'attaque par des insectes infestant le sol et leurs larves, qui comprend l'application au sol dans lequel ces plantes poussent ou doivent pousser d'une quantité efficace du point de vue insecticide d'un carboxylate d-alkykbenzyle selon l'une quelconque des revendications 7 à 9 ou d'une composition selon la revendication 10.

**Revendications pour l'Etat contractant: AT**

1. Méthode pour la protection de plantes cultivées contre l'attaque par des insectes infestant le sol et leurs larves, qui comprend l'application au sol dans lequel ces plantes poussent ou doivent pousser d'une quantité efficace du point de vue insecticide d'un cyclopropane carboxylate d'alkylbenzyle de la formule:

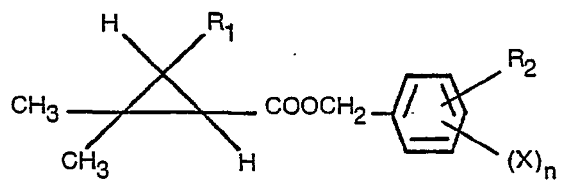

(I)

où $R_1$ représente un groupe tétrahaloéthyle ou dihalovinyle; $R_2$ représente un groupe alkyle de 1 à 4 atomes de carbone; n est 0, 1, 2, 3 ou 4 et les X, qui peuvent être identiques ou différents quand n est plus grand que 1, représentent chacun indépendamment un groupe méthyle ou éthyle ou un atome de chlore.

2. Méthode selon la revendication 1, dans laquelle $R_1$ représente un groupe dibromodichloroéthyle, dichlorovinyle ou dibromovinyle.

3. Méthode selon la revendication 2, dans laquelle $R_2$, X et n sont choisis de façon que le groupe alkylbenzyle résultant soit un groupe 4-méthylbenzyle, 2,6-diméthylbenzyle, 2-méthyl-6-chlorobenzyle ou 2,4,6-triméthylbenzyle.

4. Méthode selon la revendication 1, 2 ou 3, dans laquelle la terre est melangée physiquement avec des granules qui contiennent un carboxylate d'alkylbenzyle tel que défini dans la revendication 1, 2 ou 3 en même temps qu'un véhicule solide et un agent tensio-actif.

5. Méthode selon la revendication 1, 2 ou 3, dans laquelle le carboxylate d'alkylbenzyle est mis en composition avec un véhicule liquide et appliqué au sol par arrosage à une dose d'application de 0,1 kg/ha à 11 kg/ha.

6. Méthode selon l'une quelconque des revendications précédentes, dans laquelle le carboxylate d'alkylbenzyle a la configuration *cis*, en l'absence quasi-complète d'autres stéréo-isomères.

7. Compositions insecticides comprenant un carboxylate d'alkylbenzyle de la formule I ci-dessus où $R_1$ représente un groupe 2,2-dihalovinyle et $R_2$, n et X sont tels que définis dans la revendication 1, avec la condition que le groupe alkylbenzyle n'est pas un groupe 2,6-diméthylbenzyle, 2-méthylbenzyle ou 3,5-diméthyl-4-chlorobenzyle.

8. Compositions insecticides selon la revendication 7, dans lesquelles $R_1$ représente un groupe 2,2-dichlorovinyle; n est 0, 1 ou 2 et les substituants $R_2$ et X sur le noyau benzénique sont situés aux positions 2 et/ou 4 et/ou 6.

9. Compositions insecticides selon la revendication 8, dans lesquelles $R_2$ est un groupe méthyle et X est un groupe méthyle ou un atome de chlore.

10. Méthode pour la protection de plantes cultivées contre l'attaque par des insectes infestant le sol et leurs larves, qui comprend l'application au sol dans lequel ces plantes poussent ou doivent pousser d'une quantité efficace du point de vue insecticide d'une composition selon l'une quelconque des revendications 7 à 9.